# EUROPEAN PATENT SPECIFICATION

(11) **EP 4 353 964 B1**
(45) Date of publication and mention of the grant of the patent: **06.05.2026**
(21) Application number: 22845669.5
(22) Date of filing: 18.04.2022
(51) Int. Cl.: F02M 21/06, B63B 25/16, B63H 21/38, F02B 43/10, F17C 13/00

(54) **AMMONIA FUEL FEEDING FACILITY AND AMMONIA FUEL FEEDING METHOD**
AMMONIAKBRENNSTOFFZUFUHRANLAGE UND AMMONIAKBRENNSTOFFZUFUHRVERFAHREN
INSTALLATION D'ALIMENTATION EN COMBUSTIBLE À L'AMMONIAC ET PROCÉDÉ D'ALIMENTATION EN COMBUSTIBLE À L'AMMONIAC

(30) Priority: 20.07.2021 JP 2021119931
(43) Date of publication of application: 17.04.2024
(73) Proprietor: Mitsubishi Shipbuilding Co., Ltd., Minato-ku, Tokyo 108-8015 (JP)
(72) Inventor: YAMADA, Daisuke, Yokohama-shi, Kanagawa 220-8401 (JP); UNSEKI, Takashi, Yokohama-shi, Kanagawa 220-8401 (JP); TSUMURA, Kenji, Yokohama-shi, Kanagawa 220-8401 (JP); UEDA, Shin, Yokohama-shi, Kanagawa 220-8401 (JP); TSUKAMOTO, Hirofumi, Yokohama-shi, Kanagawa 220-8401 (JP)
(74) Representative: Studio Torta S.p.A.
(86) International application number: PCT/JP2022/018077
(87) International publication number: WO 2023/002730

(56) References cited:
- WO-A1-2018/024570
- CN-A- 111 392 019
- JP-A- 2011 117 486
- JP-A- 2019 531 966
- KR-A- 20100 133 057
- KR-A- 20170 111 937
- KR-A- 20170 114 017
- KR-A- 20180 021 317
- KR-A- 20180 028 187
- KR-A- 20180 091 982
- KR-A- 20200 046 300
- KR-A- 20200 049 933
- KR-B1- 101 397 809

## Description

### Technical Field

The present disclosure relates to an ammonia fuel feeding facility and an ammonia fuel feeding method.

The present application claims the right of priority based on Japanese Patent Application No. 2021-119931 filed with the Japan Patent Office on July 20, 2021.

### Background Art

In PTL 1, there is described a marine fuel gas supply system that vaporizes liquefied natural gas and supplies it to an engine. The liquefied natural gas is reduced in volume in a liquid state in order to improve efficiency during transportation or storage. Such liquefied natural gas is sometimes supplied to an engine or the like after being vaporized, and in PTL 1, exhaust heat from an engine is effectively used by heat exchange between cooling water of the engine and the liquefied natural gas when the liquefied natural gas is vaporized.

On the other hand, international momentum relating to decarbonized fuel is being increasing, and the introduction of an ammonia co-firing boiler to a coal-fired power plant is being considered. In a case where ammonia is used as fuel, a new facility such as a tank for storing ammonia is required. However, in existing power plants, there is a case where a space to install an ammonia tank cannot be secured. Therefore, in a power plant or the like facing the sea or a lake, storage of ammonia fuel in a floating structure that floats on the sea, the lake, or the like is being considered.

In PTL 3, there is described a floating platform equipped with an ammonia storage tank and an ammonia supply system that processes and supplies ammonia to various onshore consumers according to their specific requirements. The platform can extract hydrogen from ammonia, convert ammonia to ambient-temperature liquid ammonia, or use ammonia to generate electricity, supplying each product to different onshore facilities as needed. The system enables flexible, safe, and efficient offshore handling and distribution of ammonia and its derivatives, reducing the need for large onshore installations and associated risks.

### Citation List

### Patent Literature

[PTL 1] PCT Japanese Translation Patent Publication No. 2019-531966
[PTL 2] KR 2010 0133057 A
[PTL 3] KR 2020 0049933 A

### Summary of Invention

### Technical Problem

In a case where the liquefied natural gas is used as fuel as in PTL 1, the stored liquefied natural gas can be re-gasified and then fed to a combustion device in a facility such as a power plant. However, if it is attempted to vaporize the liquid ammonia and then feed it to the combustion device, depending on the feeding pressure or an ambient temperature, there is a possibility that the ammonia gas may be re-liquefied during the feeding. Therefore, it is preferable that the stored ammonia is fed to the combustion device in a liquid state or vaporized just before the combustion device.

However, since the stored liquid ammonia has a low temperature such as about -33°C, for example, if the liquid ammonia is burned in the combustion device as it is, an energy loss in the combustion device increases. Further, in a case where vaporization is performed just before the combustion device, external heat is required for the vaporization.

The present disclosure has been made to the above problems and has an object to provide an ammonia fuel feeding facility and an ammonia fuel feeding method, in which it is possible to improve the energy efficiency of an onshore plant using ammonia as fuel.

### Solution to Problem

In order to solve the above problems, the following configuration is adopted.

An ammonia fuel feeding facility according to the present invention there is provided an ammonia fuel feeding facility comprising: a floating structure which floats on water; an ammonia tank which is provided in the floating structure and in which liquid ammonia is stored; an ammonia line which leads the liquid ammonia in the ammonia tank to an exterior of the floating structure;
a water line which leads surrounding water on which the floating structure floats into the floating structure;a heating unit which is provided at the floating structure and heats the liquid ammonia by performing heat exchange between the liquid ammonia flowing through the ammonia line and the water flowing through the water line; a liquid ammonia state detection unit that is configured to detect at least a temperature of the liquid ammonia heated by the heating unit; a flow rate adjusting unit that is configured to adjust the flow rate of the water flowing through the water line; a water flow rate control unit that is configured to adjust a flow rate of the water by the flow rate adjusting unit such that a temperature of the liquid ammonia heated by the heating unit falls within a predetermined first_temperature range, based on a detection result of the liquid ammonia state detection unit; and
a water state detection unit that is configured to detect at least a temperature of the water whose temperature has been lowered by heat exchange with the liquid ammonia in the heating unit,
wherein the water flow rate control unit is configured to adjust the flow rate of the water by the flow rate adjusting unit such that the temperature of the water whose temperature has been lowered by heat exchange with the liquid ammonia in the heating unit falls within a predetermined second temperature range, based on a detection result of the water state detection unit.

### Advantageous Effects of Invention

According to the ammonia fuel feeding facility and the ammonia fuel feeding method of the above aspect, it is possible to improve the energy efficiency of an onshore plant using ammonia as fuel.

### Brief Description of Drawings

Fig. 1 is a diagram showing a schematic configuration of an ammonia fuel feeding facility according to a first embodiment of the present disclosure.
Fig. 2 is a diagram corresponding to Fig. 1 in an ammonia fuel feeding facility according to a second embodiment of the present disclosure.
Fig. 3 is a diagram corresponding to Fig. 1 in an ammonia fuel feeding facility according to third and fourth embodiments of the present disclosure.
Fig. 4 is a block diagram showing a schematic configuration of a control device in the third embodiment of the present disclosure.
Fig. 5 is a functional block diagram of the control device.
Fig. 6 is a flowchart of an ammonia fuel feeding method in the third embodiment of the present disclosure.
Fig. 7 is a functional block diagram of a control device in the fourth embodiment of the present disclosure.
Fig. 8 is a flowchart of an ammonia fuel feeding method in the fourth embodiment of the present disclosure. Description of Embodiments

### [First Embodiment]

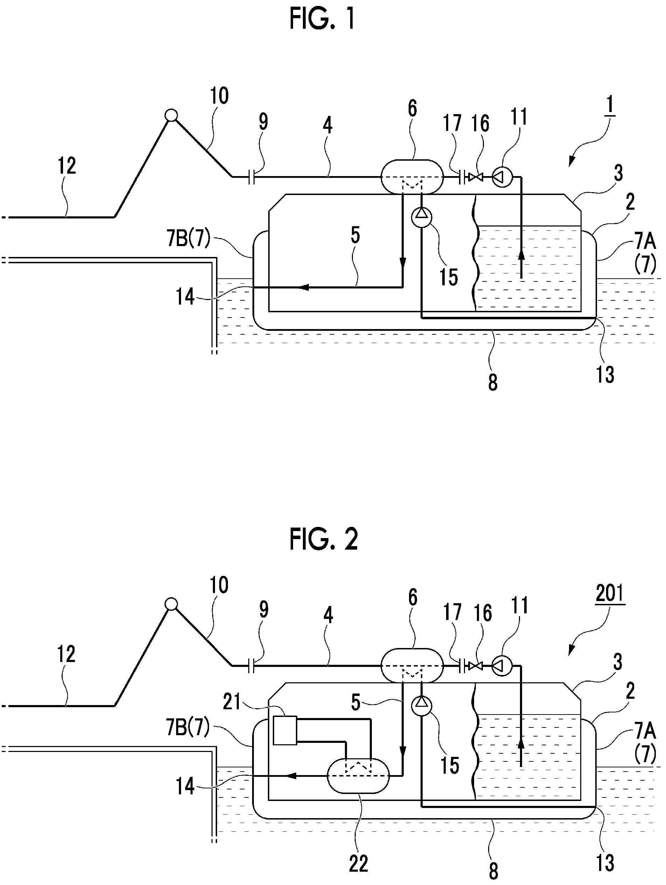

Hereinafter, an ammonia fuel feeding facility and an ammonia fuel feeding method according to a first embodiment of the present disclosure will be described based on the drawing. Fig. 1 is a diagram showing a schematic configuration of the ammonia fuel feeding facility according to the first embodiment of the present disclosure.

### (Configuration of Ammonia Fuel Feeding Facility)

As shown in Fig. 1, an ammonia fuel feeding facility 1 according to the first embodiment includes at least a floating structure 2, an ammonia tank 3, an ammonia line 4, a water line 5, and a heating unit 6. The ammonia fuel feeding facility 1 of the first embodiment supplies liquid ammonia that is used as fuel to an onshore plant (not shown) such as a coal-fired power plant.

The floating structure 2 is installed to float on water of the sea, a lake, or the like facing the onshore plant. The floating structure 2 has at least a plurality of side walls 7 surrounding the periphery, and a bottom wall 8 closing lower edges of these side walls 7. The floating structure 2 of the first embodiment is not provided with a main engine for propelling the floating structure 2. However, it may be provided with a main engine for propelling the floating structure 2. As the floating structure 2, for example, a liquefied gas carrier, an FSU (Floating Storage Unit), or the like can be used.

The ammonia tank 3 stores liquid ammonia as fuel. The ammonia tank 3 is accommodated in the floating structure 2. The temperature of the liquid ammonia stored in the ammonia tank 3 is, for example, about -33°C. The ammonia tank 3 is covered with a heat insulating material that reduces heat input from the exterior. In Fig. 1, a case where one ammonia tank 3 is provided with respect to one floating structure 2 is shown. However, a plurality of ammonia tanks 3 may be provided with respect to one floating structure 2.

The ammonia line 4 leads the liquid ammonia in the ammonia tank 3 to the exterior of the floating structure 2. The ammonia line 4 of the present embodiment has a manifold 9 at an end portion on the side opposite to the ammonia tank 3, and a connection pipe for cargo handling 10 (for example, a loading arm or the like) provided onshore can be connected to the manifold 9. Further, the ammonia line 4 is provided with a pressure raising pump 11 for raising the pressure of the liquid ammonia to feed the liquid ammonia to the exterior of the floating structure 2. The pressure raising pump 11 of the present embodiment raises the pressure of the liquid ammonia to, for example, about 1 MPa. The connection pipe for cargo handling 10 is connected to a pipe 12 extending from the onshore plant. The liquid ammonia flowing through the ammonia line 4 is supplied to the onshore plant through the connection pipe for cargo handling 10 and the pipe 12. Here, in the onshore plant, for example, after the liquid ammonia is pressurized and heated, it is sprayed in a liquid state and burned, or after the liquid ammonia is pressurized and heated to be vaporized into an ammonia gas state, it is burned. A case is exemplified where the ammonia line 4 of the present embodiment is provided with an on/off valve 16 for opening and closing the flow path of the ammonia line 4 between the pressure raising pump 11 and the heating unit 6. Further, a case is exemplified where the ammonia line 4 is provided with a pipe coupling 17 between the on/off valve 16 and the heating unit 6. The on/off valve 16 and the pipe coupling 17 may not be provided as necessary and may be omitted. Further, the disposition of the on/off valve 16 is not limited to a location between the pressure raising pump 11 and the heating unit 6, and the disposition of the pipe coupling 17 is also not limited to a location between the on/off valve 16 and the heating unit 6.

The water line 5 leads surrounding water on which the floating structure 2 floats into the floating structure 2. The water line 5 of the present embodiment has an introduction port 13 in one side wall 7A out of two side walls disposed to face each other, and a discharge port 14 in the other side wall 7B. The water line 5 has a water pump 15 for feeding water from the introduction port 13 toward the discharge port 14. With such a configuration, the water introduced from the introduction port 13 into the water line 5 is discharged from the discharge port 14 after passing through the heating unit 6 disposed above the ammonia tank 3. A case where the water line 5 of the present embodiment is arranged to pass through the accommodation space of the ammonia tank 3 is exemplified. However, the water line 5 may be arranged to pass around the ammonia tank 3. In a case where the water line 5 passes through the accommodation space of the ammonia tank 3, the water line 5 is insulated such that heat input from the water line 5 does not occur in the liquid ammonia stored in the ammonia tank 3.

The heating unit 6 is provided at the floating structure 2. The heating unit 6 of the present embodiment is installed above the ammonia tank 3, as described above. The heating unit 6 heats the liquid ammonia through the heat exchange between the liquid ammonia flowing through the ammonia line 4 and the water flowing through the water line 5. At this time, the temperature of the water flowing through the water line 5 is lowered by the heat exchange with the liquid ammonia. Here, the temperature of the liquid ammonia after being heated by the heating unit 6 can be adjusted by increasing or decreasing the flow rate of the water flowing through the water line 5. The temperature of the water around the floating structure 2 changes depending on the season, weather, or the like, and therefore, by adjusting the flow rate of the water flowing through the water line 5, it is possible to make the temperature of the liquid ammonia after heating be within a predetermined range.

### <<Operation and Effects>>

The ammonia fuel feeding facility of the first embodiment heats the liquid ammonia through the heat exchange between the water flowing through the water line and the liquid ammonia flowing through the ammonia line in the heating unit 6.

In this way, it becomes possible to raise the temperature of the liquid ammonia by using the heat of the surrounding water on which the floating structure 2 floats. Therefore, it is possible to reduce an energy loss in a combustion device such as a boiler in the onshore plants such as a coal-fired power plant. Further, since the energy for heating the liquid ammonia just before the combustion device provided in the onshore plant can be reduced, the use of external heat such as steam for heating the liquid ammonia in the onshore plant can be suppressed. Therefore, it is possible to improve the energy efficiency of the onshore plant that uses ammonia as fuel.

In the first embodiment, the liquid ammonia is further heated by the heating unit 6 after being raised in pressure by the pressure raising pump 11.

In this way, the liquid ammonia with raised pressure can be fed to equipment such as a vaporizer or a combustion device onshore. Therefore, the pressure of the liquid ammonia can be rapidly increased to a portion where the width of latent heat on the Mollier diagram is narrow. Therefore, it becomes possible to improve the energy efficiency in the onshore plants.

### [Second Embodiment]

Next, an ammonia fuel feeding facility according to a second embodiment of the present disclosure will be described based on the drawing. The second embodiment is different from the first embodiment only in that the second embodiment includes heat generation equipment and a reheating unit. Therefore, in the second embodiment, the same portions as those in the first embodiment are denoted by the same reference numerals, and overlapping description is omitted.

Fig. 2 is a diagram corresponding to Fig. 1 in a second embodiment of the present disclosure.

An ammonia fuel feeding facility 201 of the second embodiment includes at least the floating structure 2, the ammonia tank 3, the ammonia line 4, the water line 5, the heating unit 6, heat generation equipment 21, and a reheating unit 22. Similarly to the first embodiment, the ammonia fuel feeding facility 201 of the second embodiment also supplies the liquid ammonia that is used as fuel to the onshore plant (not shown) such as a coal-fired power plant.

The heat generation equipment 21 is equipment that is provided in the floating structure 2 and generates heat. As the heat generation equipment 21, a power generator engine that generates electric power within the floating structure 2, an air conditioner provided in the floating structure 2, and a drain cooler in a case of using steam as a heat source can be exemplified.

The reheating unit 22 reheats the water whose temperature has been lowered by the heat exchange with the liquid ammonia in the heating unit 6, by using the heat emitted from the heat generation equipment 21. The reheating unit 22 exemplified in the second embodiment reheats the water whose temperature has been lowered by using the exhaust heat emitted from the heat generation equipment 21. The water reheated by the reheating unit 22 is discharged from the discharge port 14 of the water line 5 to the exterior of the floating structure 2. In the second embodiment, a case where the water is reheated by using the exhaust heat has been described as an example. However, the heat that is used for reheating the water is not limited to the exhaust heat. For example, the heat generation equipment 21 may be dedicated equipment that generates heat to reheat the water whose temperature has been lowered.

### <<Operation and Effects>>

In the second embodiment, the water in the water line 5 from the heating unit 6 to the discharge port 14 is reheated by using the heat generated inside the floating structure 2.

In this way, in a case where a temperature lower limit value of the water that is discharged from the floating structure 2 is set, it becomes possible to make the temperature of the water that is discharged from the discharge port 14 to the exterior of the floating structure 2 higher than the temperature lower limit value. Further, since the water that is discharged to the exterior of the floating structure 2 can be reheated, it is not necessary to increase the flow rate of the water that is supplied to the heating unit 6 in order to raise the temperature of the water that is discharged to the exterior of the floating structure 2, so that the flow rate of the water that is supplied to the heating unit 6 can be reduced. As a result, energy saving can be achieved by suppressing the output of the water pump 15. Further, since it becomes possible to use a small water pump 15 with a smaller output, for example, it becomes possible to increase the size of the ammonia tank 3 that is provided in the floating structure 2 or improve the degree of freedom in installing other devices.

Further, it is possible to suppress the temperature of the water that is discharged to the surroundings of the floating structure 2 from being excessively lowered to affect the surrounding ecological system.

### [Third Embodiment]

Next, an ammonia fuel feeding facility in a third embodiment of the present disclosure will be described based on the drawings. The third embodiment is different from the first embodiment only in that the flow rate of the water flowing through the water line 5 is automatically controlled. Therefore, in the third embodiment, the same portions as those in the first embodiment are denoted by the same reference numerals, and overlapping description is omitted.

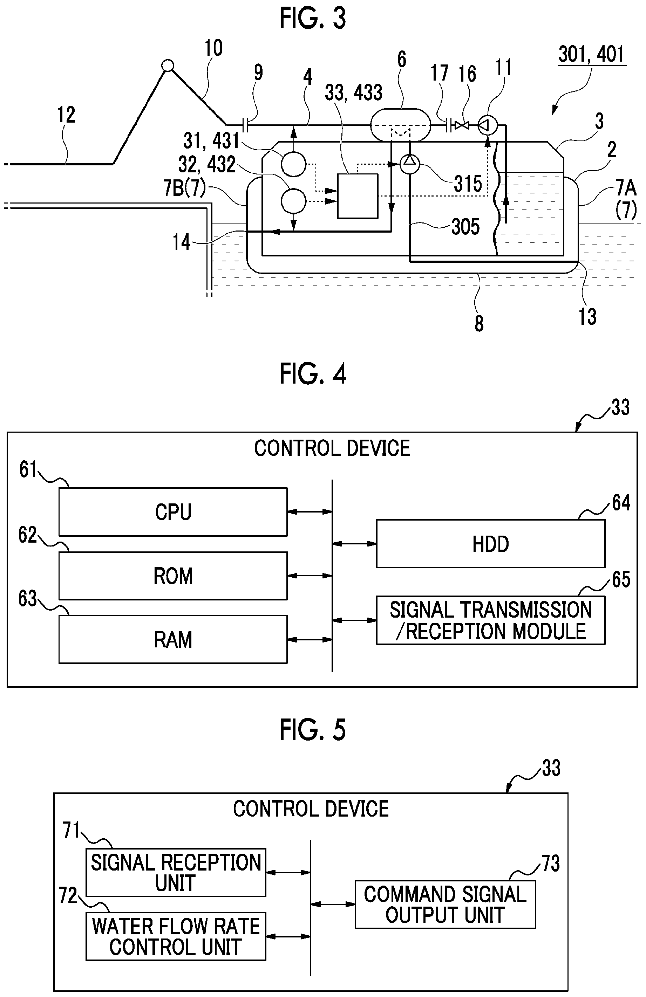

Fig. 3 is a diagram corresponding to Fig. 1 in third and fourth embodiments of the present disclosure.

An ammonia fuel feeding facility 301 of the third embodiment includes the floating structure 2, the ammonia tank 3, the ammonia line 4, a water line 305, the heating unit 6, a liquid ammonia state detection unit 31, a water state detection unit 32, and a control device 33. Similarly to the first embodiment, the ammonia fuel feeding facility 301 of the third embodiment also supplies liquid ammonia that is used as fuel to the onshore plant (not shown) such as a coal-fired power plant.

Similarly to the water line 5 of the first embodiment, the water line 305 leads surrounding water on which the floating structure 2 floats into the floating structure 2. The water line 305 of the third embodiment is different from the water line 5 of the first embodiment in that a water pump (a flow rate adjusting unit) 315 capable of adjusting a flow rate is provided in the middle of the water line 305. The operation of the water pump 315 is controlled by the control device 33.

The liquid ammonia state detection unit 31 detects at least a temperature as the state of the liquid ammonia heated by the heating unit 6. The liquid ammonia state detection unit 31 of the present embodiment detects the state of the liquid ammonia flowing through the ammonia line 4 at a position close to the manifold 9 connected to the connection pipe for cargo handling 10 in the ammonia line 4. A detection signal of the liquid ammonia state detection unit 31 is input to the control device 33.

The water state detection unit 32 detects at least a temperature as the state of the water whose temperature has been lowered by the heat exchange with the liquid ammonia in the heating unit 6. The water state detection unit 32 of the present embodiment detects the state of the water flowing through the water line 305 at a position closer to the discharge port 14 than the heating unit 6 in the water line 305. A detection signal of the water state detection unit 32 is input to the control device 33.

### (Configuration of Control Device)

The control device 33 controls the ammonia fuel feeding facility 301. More specifically, the control device 33 controls the water pump 315, based on the detection result of the liquid ammonia state detection unit 31. Further, the control device 33 controls the water pump 315, based on the detection result of the water state detection unit 32.

### (Hardware Configuration Diagram of Control Device)

Fig. 4 is a block diagram showing a schematic configuration of the control device in the third embodiment of the present disclosure.

As shown in Fig. 4, the control device 33 is a computer that includes a CPU 61 (Central Processing Unit), a ROM 62 (Read Only Memory), a RAM 63 (Random Access Memory), a HDD 64 (Hard Disk Drive), a signal transmission/reception module 65, and the like. The signal transmission/reception module 65 receives the detection signals of the liquid ammonia state detection unit 31 and the water state detection unit 32. Further, the signal transmission/reception module 65 transmits a control signal for controlling at least the water pump 315.

### (Functional Block Diagram of Control Device)

Fig. 5 is a functional block diagram of the control device.

The CPU 61 of the control device 33 realizes each functional configuration of a signal receiving unit 71, a water flow rate control unit 72, and a command signal output unit 73 by executing a program stored in advance in the HDD 64, the ROM 62, or the like.

The signal receiving unit 71 receives the detection signals of the liquid ammonia state detection unit 31 and the water state detection unit 32 through the signal transmission/reception module 65.

The water flow rate control unit 72 controls the operation of the water pump 315, more specifically, the flow rate (volume flow rate or mass flow rate) of the water that is supplied to the heating unit 6 by the water pump 315, based on the detection signals of the liquid ammonia state detection unit 31 and the water state detection unit 32 received by the signal receiving unit 71.

The command signal output unit 73 outputs a control signal to the water pump 315 to realize control by the water flow rate control unit 72.

### (Operation of Control Device)

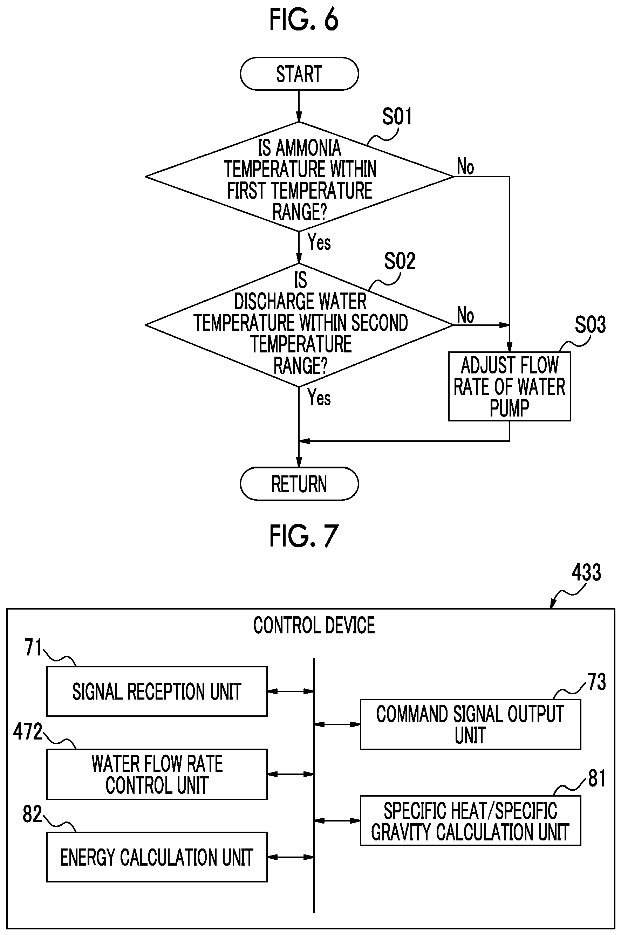

Fig. 6 is a flowchart of an ammonia fuel feeding method in the third embodiment of the present disclosure.

Next, the operation of the control device 33 described above will be described with reference to the flowchart of Fig. 6.

First, the water flow rate control unit 72 of the control device 33 determines whether or not the temperature of the liquid ammonia heated by the heating unit 6 falls within a predetermined first temperature range, based on the detection result of the liquid ammonia state detection unit 31 (Step S01). In a case where it is determined that the temperature of the liquid ammonia is not within the first temperature range (No in step S01), the flow rate of the water pump 315 is adjusted (step S03). In this step S03, for example, in a case where the temperature of the liquid ammonia is lower than the first temperature range, the output of the water pump 315 can be controlled to be increased by a predetermined unit flow rate, and in a case where the temperature of the liquid ammonia is higher than the first temperature range, the output of the water pump 315 can be controlled to be decreased by a predetermined unit flow rate. Then, the routine returns to step S01 and the above processing is repeated again. That is, the output of the water pump 315 is gradually increased or decreased until the temperature detected by the liquid ammonia state detection unit 31 falls within the predetermined first temperature range. Here, the first temperature range is a temperature range higher than the temperature of the liquid ammonia stored in the ammonia tank 3.

On the other hand, in the above determination, in a case where it is determined that the temperature of the liquid ammonia falls within the first temperature range (Yes in step S01), the water flow rate control unit 72 determines whether or not the temperature of the water after the heat exchange with the liquid ammonia in the heating unit 6 (hereinafter referred to as a discharge water temperature) falls within a predetermined second temperature range, based on the detection result of the water state detection unit 32 (step S02). In a case where it is determined that the discharge water temperature is not within the second temperature range (No in step S02), the flow rate of the water pump 315 is adjusted (step S03). In this step S03, for example, in a case where the discharge water temperature is lower than the second temperature range, the output of the water pump 315 can be controlled to be increased by a predetermined unit flow rate, and in a case where the discharge water temperature is higher than the second temperature range, the output of the water pump 315 can be controlled to be decreased by a predetermined unit flow rate. Then, the routine returns to step S01 and the above processing is repeated again. That is, the output of the water pump 315 is gradually increased or decreased until the temperature detected by the water state detection unit 32 falls within the predetermined second temperature range. Further, in a case where it is determined that the discharge water temperature falls within the second temperature range (Yes in step S02), the flow rate of the water pump 315 is not adjusted and the routine returns to step S01. In this way, the increase of decrease of the flow rate by the water pump 315 is not performed until either the liquid ammonia temperature is no longer within the first temperature range or the discharge water temperature is no longer within the second temperature range. Here, the second temperature range is a temperature range lower than the temperature of the water that is present around the floating structure 2.

### <<Operation and Effects>>

The third embodiment includes the liquid ammonia state detection unit 31 that detects the temperature of the liquid ammonia heated by the heating unit 6, the water pump 315 that adjusts the flow rate of the water flowing through the water line 305, and the water flow rate control unit 72 that adjusts the flow rate of the water by the water pump 315 such that the temperature of the liquid ammonia heated by the heating unit 6 falls within the predetermined first temperature range, based on the detection result of the liquid ammonia state detection unit 31.

In this way, it becomes possible to automatically adjust the flow rate of the water that is heat-exchanged with the liquid ammonia such that the temperature of the liquid ammonia heated by heat exchange falls within the predetermined first temperature range. Therefore, for example, even in a case where the water temperature around the floating structure 2 fluctuates due to a change in season, weather, or the like, it is possible to suppress a decrease in the energy efficiency in the onshore plant while reducing the burden on the worker.

The third embodiment further includes the water state detection unit 32 that detects the temperature of the water whose temperature has been lowered by the heat exchange with the liquid ammonia in the heating unit 6. Then, the water flow rate control unit 72 adjusts the flow rate of the water by the water pump 315 such that the temperature of the water whose temperature has been lowered by the heat exchange with the liquid ammonia in the heating unit 6 falls within the predetermined second temperature range, based on the detection result of the water state detection unit 32.

In this way, it becomes possible to automatically adjust the flow rate of the water that is heat-exchanged with the liquid ammonia such that the temperature of the water heat-exchanged with the liquid ammonia falls within the predetermined second temperature range. Therefore, it is possible to suppress the temperature of the water that is discharged to the surroundings of the floating structure 2 from deviating from the temperature of the water that is present around the floating structure 2 to affect the surrounding ecological system, while reducing the burden on the worker.

### [Fourth Embodiment]

Next, an ammonia fuel feeding facility in a fourth embodiment of the present disclosure will be described based on the drawings. In the third embodiment described above, the flow rate of the water pump 315 is adjusted based on the liquid ammonia temperature and the discharge water temperature. However, the fourth embodiment is different from the third embodiment in that the flow rate of the water pump 315 is adjusted based on the energy of the liquid ammonia and the energy of the water flowing through the water line 305. Therefore, in the fourth embodiment, Fig. 3 is adopted, and the same portions as those in the third embodiment are denoted by the same reference numerals. Further, description that overlaps with that of the third embodiment is omitted.

As shown in Fig. 3, an ammonia fuel feeding facility 401 of the fourth embodiment includes at least the floating structure 2, the ammonia tank 3, the ammonia line 4, the water line 305, the heating unit 6, a liquid ammonia state detection unit 431, a water state detection unit 432, and a control device 433, similarly to the ammonia fuel feeding facility 301 of the third embodiment.

The liquid ammonia state detection unit 431 detects at least a temperature, pressure, and a flow rate as the state of the liquid ammonia heated by the heating unit 6. The liquid ammonia state detection unit 431 of the present embodiment detects the state of the liquid ammonia flowing through the ammonia line 4 at a position close to the manifold 9 connected to the connection pipe for cargo handling 10 in the ammonia line 4. A detection signal of the liquid ammonia state detection unit 431 is input to the control device 433.

The water state detection unit 432 detects at least a temperature (discharge water temperature), pressure, and a flow rate as the state of the water whose temperature has been lowered by the heat exchange with the liquid ammonia in the heating unit 6. The water state detection unit 432 of the present embodiment detects the state of the water flowing through the water line 305 at a position closer to the discharge port 14 than the heating unit 6 in the water line 305. A detection signal of the water state detection unit 432 is input to the control device 433.

### (Configuration of Control Device)

The control device 433 controls the ammonia fuel feeding facility 401. More specifically, the control device 433 controls the water pump 315, based on the detection result of the liquid ammonia state detection unit 431. Further, the control device 433 controls the water pump 315, based on the detection result of the water state detection unit 432. The description of the hardware configuration of the control device 433 is omitted because it is the same as that in the third embodiment.

### (Functional Block Diagram of Control Device)

Fig. 7 is a functional block diagram of the control device in the fourth embodiment of the present disclosure.

The CPU 61 of the control device 433 realizes each functional configuration of the signal receiving unit 71, a specific heat/specific gravity calculation unit 81, an energy calculation unit 82, a water flow rate control unit 472, and the command signal output unit 73 by executing a program stored in advance in the HDD 64, the ROM 62, or the like.

The signal receiving unit 71 receives the detection signals of the liquid ammonia state detection unit 431 and the water state detection unit 432 through the signal transmission/reception module 65.

The specific heat/specific gravity calculation unit 81 calculates the specific heat (for example, kcal/g°C) and specific gravity (kg/m³) of the liquid ammonia, based on the temperature (for example, °C or K) and pressure (for example, kg/cm², bar. kPa, MPa, or the like) of the liquid ammonia detected by the liquid ammonia state detection unit 431. Further, the specific heat/specific gravity calculation unit 81 calculates the specific heat (for example, kcal/g°C) and specific gravity (kg/m³) of the water, based on the discharge water temperature (for example, °C or K) detected by the water state detection unit 432 and the pressure (for example, kg/cm², bar. kPa, MPa, or the like) of the water flowing through the water line 305.

The energy calculation unit 82 calculates the energy (for example, kcal/h) of the liquid ammonia, based on the flow rate (for example, m³/h) of the liquid ammonia detected by the liquid ammonia state detection unit 431 and the specific heat and specific gravity of the liquid ammonia calculated by the specific heat/specific gravity calculation unit 81. Further, the energy calculation unit 82 calculates the energy (for example, kcal/h) of the water, based on the flow rate (for example, m³/h) of the water detected by the water state detection unit 432 and the specific heat and specific gravity of the water calculated by the specific heat/specific gravity calculation unit 81.

The water flow rate control unit 472 controls the operation of the water pump 315, more specifically, the flow rate (volume flow rate or mass flow rate) of the water that is supplied to the heating unit 6 by the water pump 315, based on the energy of the liquid ammonia and the energy of the water calculated by the energy calculation unit 82.

The command signal output unit 73 outputs a control signal to the water pump 315 to realize control by the water flow rate control unit 72.

### (Operation of Control Device)

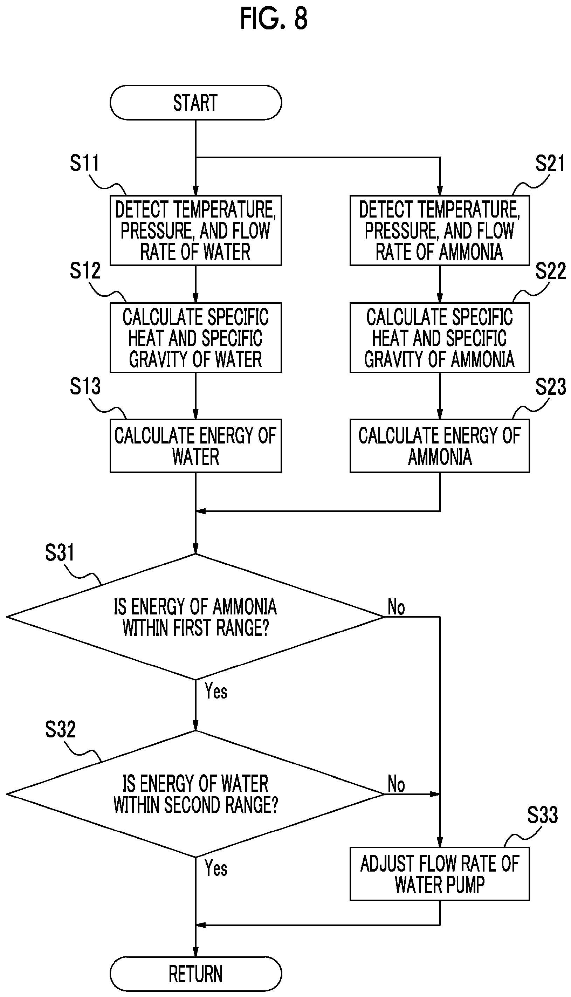

Fig. 8 is a flowchart of an ammonia fuel feeding method in the fourth embodiment of the present disclosure.

Next, the operation of the control device 433 described above will be described with reference to the flowchart of Fig. 8.

First, the control device 433 calculates the energy of the liquid ammonia, based on the detection result of the liquid ammonia state detection unit 431 (steps S21 to S23), and calculates the energy of the water, based on the detection result of the water state detection unit 432 (steps S11 to S13), by the specific heat/specific gravity calculation unit 81 and the energy calculation unit 82.

Subsequently, the water flow rate control unit 472 of the control device 433 determines whether or not the energy of the liquid ammonia heated by the heating unit 6 falls within a predetermined first range, based on the calculation result of the energy calculation unit 82 (step S31 ). In a case where it is determined that the energy of the liquid ammonia is not within the first range (No in step S31), the flow rate of the water pump 315 is adjusted (step S33). In this step S33, for example, in a case where the energy of the liquid ammonia is lower than the first range, the output of the water pump 315 can be controlled to be increased by a predetermined unit flow rate, and in a case where the energy of the liquid ammonia is higher than the first range, the output of the water pump 315 can be controlled to be decreased by a predetermined unit flow rate. Then, the routine returns to step S11 and the above processing is repeated again. That is, the output of the water pump 315 is gradually increased or decreased until the energy of the liquid ammonia falls within the predetermined first range.

On the other hand, in the above determination, in a case where it is determined that the energy of the liquid ammonia falls within the first range (Yes in step S31), the water flow rate control unit 472 determines whether or not the energy of the water after the heat exchange with the liquid ammonia in the heating unit 6 falls within a predetermined second range, based on the calculation result of the energy calculation unit 82, (step S32). In a case where it is determined that the energy of the water is not within the second range (No in step S32), the flow rate of the water pump 315 is adjusted (step S33). In this step S33, for example, in a case where the energy of the water is lower than the second range, the output of the water pump 315 can be controlled to be increased by a predetermined unit flow rate, and in a case where the energy of the water is higher than the second range, the output of water pump 315 can be controlled to be decreased by a predetermined unit flow rate. Then, the routine returns to step S11 and the above processing is repeated again. That is, the output of the water pump 315 is gradually increased or decreased until the energy of the water calculated by the energy calculation unit 82 falls within the predetermined second range. Further, in a case where it is determined that the energy of the water falls within the second range (Yes in step S32), the flow rate of the water pump 315 is not adjusted and the routine returns to step S11. In this way, the increase of decrease of the flow rate by the water pump 315 is not performed until either the energy of the liquid ammonia is no longer within the first range or the energy of the water is no longer within the second range.

### <<Operation and Effects>>

The fourth embodiment includes the liquid ammonia state detection unit 431 that detects the temperature, pressure, and flow rate of the liquid ammonia heated by the heating unit 6, the water pump 315 that adjusts the flow rate of the water flowing through the water line 305, and the water flow rate control unit 472 that adjusts the flow rate of the water pump 315 such that the energy of the liquid ammonia heated by the heating unit 6 falls within the predetermined first range, based on the detection result of the liquid ammonia state detection unit 431.

In this way, it becomes possible to automatically adjust the flow rate of the water that is heat-exchanged with the liquid ammonia such that the energy of the liquid ammonia heated by the heat exchange falls within the predetermined first range. Therefore, for example, even in a case where the water temperature around the floating structure 2 is lowered due to a change in season, weather, or the like, it is possible to suppress a decrease in the energy efficiency of the onshore plant while reducing the burden on the worker. Further, in the fourth embodiment, since the adjustment of water flow rate by the water pump 315 is performed based on the energy of the liquid ammonia instead of the temperature of the liquid ammonia, it becomes possible to further suppress a decrease in the energy efficiency of the onshore plant by reducing the energy fluctuation of the liquid ammonia.

The fourth embodiment further includes the water state detection unit 432 that detects the state of the water whose temperature has been lowered by the heat exchange with the liquid ammonia in the heating unit 6. Then, the water flow rate control unit 472 adjusts the flow rate of the water by the water pump 315 such that the energy of the water whose temperature has been lowered by the heat exchange with the liquid ammonia in the heating unit 6 falls within the predetermined second range, based on the detection result of the water state detection unit 432.

In this way, it becomes possible to automatically adjust the flow rate of the water that is heat-exchanged with the liquid ammonia such that the energy of the water heat-exchanged with liquid ammonia falls within the predetermined second range. Therefore, it is possible to suppress the energy of the water that is discharged to the surroundings of the floating structure 2 from deviating from the energy of the water that is present around the floating structure 2 to affect the surrounding ecological system, while reducing the burden on the worker.

### <Other Embodiments>

The embodiments of the present disclosure have been described in detail above with reference to the drawings. However, the specific configurations are not limited to the embodiments, and also include design changes and the like within a scope which does not depart from the gist of the present disclosure.

For example, in the heating unit 6 of each of the embodiments described above, a case where the water flowing through the water line 5 and the liquid ammonia flowing through the ammonia line 4 are directly heat-exchanged has been described. However, the heat exchange between the water and the liquid ammonia in the heating unit 6 may be performed through another refrigerant.

In each of the embodiments described above, a case where the water taken in from the introduction port 13 of the water line 5 is supplied to the heating unit 6 has been described. However, in a case where the floating structure 2 is provided with equipment that requires cooling, such equipment may be cooled with the water flowing through the water line 5 to raise the water temperature before supplying the water to the heating unit 6.

In the third embodiment, a case where both the liquid ammonia state detection unit 31 and the water state detection unit 32 are provided has been described. However, in a non-claimed variant, the water state detection unit 32 may be omitted and the processing of step S02 that is performed by the water flow rate control unit 72 may also be omitted. That is, the output of the water pump 315 may be adjusted based on only the detection result of the liquid ammonia state detection unit 31.

In the third embodiment, a case where the flow rate of the water flowing through the water line 305 is increased or decreased by adjusting the output of the water pump 315 has been described as an example. However, the method for increasing or decreasing the flow rate of the water flowing through the water line 305 is not limited to the configuration of adjusting the output of the water pump 315. The flow rate of the water that is supplied to the heating unit 6 may be adjusted, for example, by providing a branch line (not shown) that discharges water from the water line 305 to the exterior of the floating structure 2 without passing through the heating unit 6, and adjusting the amount of water branched to the branch line with a control valve or the like. Further, a bypass line (not shown) may be provided to allow the water flowing through the water line 305 to bypass the heating unit 6. Even in a case where such a bypass line is provided, the flow rate of the water that is supplied to the heating unit 6 can be adjusted by a control valve or the like. Further, in a case where the bypass line is provided, since the water that has passed through the bypass line and has not undergone heat exchange joins the water whose temperature has been lowered by the heating unit 6, a decrease in the temperature of the water that is discharged from the discharge port 14 of the water line 305 can be suppressed.

Further, in the third embodiment, a case has been described in which the flow rate of the water flowing through the water line 305 is increased or decreased based on the temperature of the liquid ammonia detected by the liquid ammonia state detection unit 31 and the temperature of the water detected by the water state detection unit 32. However, there is no limitation to this configuration, and for example, the liquid ammonia state detection unit 31 may be capable of detecting the flow rate or pressure of the liquid ammonia, in addition to the temperature of the liquid ammonia, and the water state detection unit 32 may be capable of detecting the flow rate or pressure of the water, in addition to the temperature of the water. Then, the control device 33 may calculate the amount of heat per unit mass of the liquid ammonia, based on the temperature and flow rate of the liquid ammonia, or the temperature and pressure of the liquid ammonia, calculate the amount of heat per unit mass of the water, based on the temperature and flow rate of the water, or the temperature and pressure of the water, and control the water pump 315, based on the calculated amount of heat of the liquid ammonia and the calculated amount of heat of the water (also called, for example, Heat Mass balance). In this way, the energy balance between the liquid ammonia and the water can be controlled more precisely.

### Industrial Applicability

According to the ammonia fuel feeding facility and the ammonia fuel feeding method of the above aspect, it is possible to improve the energy efficiency of an onshore plant using ammonia as fuel.

### Reference Signs List

- 1:: ammonia fuel feeding facility
- 2:: floating structure
- 3:: ammonia tank
- 4:: ammonia line
- 5, 305:: water line
- 6:: heating unit
- 7, 7A, 7B:: side wall
- 8:: bottom wall
- 9:: manifold
- 10:: connection pipe for cargo handling
- 11:: pressure raising pump
- 12:: pipe
- 13:: introduction port
- 14:: discharge port
- 15,315:: water pump
- 16:: on/off valve
- 17:: pipe coupling
- 21:: heat generation equipment
- 22:: reheating unit
- 31,431:: liquid ammonia state detection unit
- 32, 432:: water state detection unit
- 33, 433:: control device
- 61:: CPU
- 62:: ROM
- 63:: RAM
- 64:: HDD
- 65:: signal transmission/reception module
- 71:: signal receiving unit
- 72, 472:: water flow rate control unit
- 73:: command signal output unit
- 81:: specific heat/specific gravity calculation unit
- 82:: energy calculation unit

## Claims

1. An ammonia fuel feeding facility (1) comprising:
a floating structure (2) which floats on water;
an ammonia tank (3) which is provided in the floating structure (2) and in which liquid ammonia is stored;
an ammonia line (4) which leads the liquid ammonia in the ammonia tank (3) to an exterior of the floating structure (2);
a water line (5, 305) which leads surrounding water on which the floating structure (2) floats into the floating structure (2);
a heating unit (6) which is provided at the floating structure (2) and heats the liquid ammonia by performing heat exchange between the liquid ammonia flowing through the ammonia line (4) and the water flowing through the water line (5, 305), **characterised by**
a liquid ammonia state detection unit (31,431) that is configured to detect at least a temperature of the liquid ammonia heated by the heating unit (6);
a flow rate adjusting unit (315) that is configured to adjust the flow rate of the water flowing through the water line (5, 305);
a water flow rate control unit (72, 472) that is configured to adjust a flow rate of the water by the flow rate adjusting unit (315) such that a temperature of the liquid ammonia heated by the heating unit (6) falls within a predetermined first_temperature range, based on a detection result of the liquid ammonia state detection unit (31,431); and
a water state detection unit (32) that is configured to detect at least a temperature of the water whose temperature has been lowered by heat exchange with the liquid ammonia in the heating unit (6),
wherein the water flow rate control unit (72, 472) is configured to adjust the flow rate of the water by the flow rate adjusting unit (315) such that the temperature of the water whose temperature has been lowered by heat exchange with the liquid ammonia in the heating unit (6) falls within a predetermined second temperature range, based on a detection result of the water state detection unit (32).

2. The ammonia fuel feeding facility (1) according to Claim 1, further comprising:
heat generation equipment (21) that is provided in the floating structure (2) and generates heat; and
a reheating unit (22) that reheats the water whose temperature has been lowered by heat exchange with the liquid ammonia in the heating unit, by heat emitted from the heat generation equipment (21).

3. The ammonia fuel feeding facility (1) according to Claim 1 or 2, further comprising:
a pressure raising pump (11) that raises pressure of the liquid ammonia.

4. An ammonia fuel feeding method comprising:
heating liquid ammonia stored in an ammonia tank (3) provided in a floating structure (2) which floats on water through heat exchange with surrounding water on which the floating structure floats, and then supplying the liquid ammonia to an exterior of the floating structure (2), **characterised by**
adjusting a flow rate of the water that is heat-exchanged with the liquid ammonia such that a temperature of the liquid ammonia heated by heat exchange falls within a predetermined first temperature range; and
adjusting the flow rate of the water that is heat-exchanged with the liquid ammonia such that a temperature of the water heat-exchanged with the liquid ammonia falls within a predetermined second temperature range.

## Patentansprüche

1. Ammoniakbrennstoff-Zufuhranlage (1) aufweisend:
eine schwimmende Struktur (2), die auf Wasser schwimmt;
einen Ammoniaktank (3), der in der schwimmenden Struktur (2) bereitgestellt ist und in dem Flüssigammoniak gespeichert ist;
eine Ammoniakleitung (4), die das in dem Ammoniaktank (3) gespeicherte Flüssigammoniak aus der schwimmenden Struktur (2) nach außen leitet;
eine Wasserleitung (5, 305), die Umgebungswasser, auf dem die schwimmende Struktur (2) schwimmt, in die schwimmende Struktur (2) leitet;
eine Erwärmungseinheit (6), die an der schwimmenden Struktur (2) bereitgestellt ist und durch Durchführen von Wärmeaustausch zwischen dem durch die Ammoniakleitung (4) fließenden Flüssigammoniak und dem durch die Wasserleitung (5, 305) fließenden Wasser das Flüssigammoniak erwärmt,
**gekennzeichnet durch**
eine Flüssigammoniakzustand-Detektionseinheit (31, 431), die konfiguriert ist, zumindest eine Temperatur des von der Erwärmungseinheit (6) erwärmten Flüssigammoniaks zu detektieren;
eine Durchflussrate-Anpassungseinheit (315), die konfiguriert ist, die Durchflussrate des durch die Wasserleitung (5, 305) fließenden Wassers anzupassen;
eine Wasserdurchflussrate-Steuereinheit (72, 472), die konfiguriert ist, auf Basis eines Detektionsergebnisses der Flüssigammoniakzustand-Detektionseinheit (31, 431) eine Durchflussrate des Wassers mittels der Durchflussrate-Anpassungseinheit (315) derart anzupassen, dass eine Temperatur des von der Erwärmungseinheit (6) erwärmten Flüssigammoniaks in einen vorgegebenen ersten Temperaturbereich fällt; und
eine Wasserzustand-Detektionseinheit (32), die konfiguriert ist, zumindest eine Temperatur des Wassers, dessen Temperatur durch Wärmeaustausch mit dem Flüssigammoniak in der Erwärmungseinheit (6) erniedrigt worden ist, zu detektieren,
wobei die Wasserdurchflussrate-Steuereinheit (72, 472) konfiguriert ist, auf Basis eines Detektionsergebnisses der Wasserzustand-Detektionseinheit (32) die Durchflussrate des Wassers mittels der Durchflussrate-Anpassungseinheit (315) derart anzupassen, dass die Temperatur des Wassers, dessen Temperatur durch Wärmeaustausch mit dem Flüssigammoniak in der Erwärmungseinheit (6) erniedrigt worden ist, in einen vorgegebenen zweiten Temperaturbereich fällt.

2. Ammoniakbrennstoff-Zufuhranlage (1) nach Anspruch 1, ferner aufweisend:
eine Wärmeerzeugungseinrichtung (21), die in der schwimmenden Struktur (2) bereitgestellt ist und Wärme erzeugt; und
eine Wiedererwärmungseinheit (22), die das Wasser, dessen Temperatur durch Wärmeaustausch mit dem Flüssigammoniak in der Erwärmungseinheit erniedrigt worden ist, durch Wärme, die aus der Wärmeerzeugungseinrichtung (21) abgegeben wird, wiedererwärmt.

3. Ammoniakbrennstoff-Zufuhranlage (1) nach Anspruch 1 oder 2, ferner aufweisend:
eine Druckerhöhungspumpe (11), die einen Druck des Flüssigammoniaks erhöht.

4. Ammoniakbrennstoff-Zufuhrverfahren aufweisend:
Erwärmen von Flüssigammoniak, das in einem Ammoniaktank (3) gespeichert ist, der in einer schwimmenden Struktur (2) bereitgestellt ist, die auf Wasser schwimmt, durch Wärmeaustausch mit Umgebungswasser, auf dem die schwimmende Struktur schwimmt, und dann Ausleiten des Flüssigammoniaks aus der schwimmenden Struktur (2) nach außen,
**gekennzeichnet durch**
Anpassen einer Durchflussrate des mit dem Flüssigammoniak Wärme austauschenden Wassers derart, dass eine Temperatur des durch Wärmetausch erwärmten Flüssigammoniaks in einen vorgegebenen ersten Temperaturbereich fällt; und
Anpassen der Durchflussrate des mit dem Flüssigammoniak Wärme austauschenden Wassers derart, dass eine Temperatur des Wassers, das mit dem Flüssigammoniak Wärme ausgetauscht hat, in einen vorgegebenen zweiten Temperaturbereich fällt.

## Revendications

1. Installation (1) d'alimentation en combustible à l'ammoniaque comprenant :
une structure flottante (2) qui flotte sur de l'eau ;
un réservoir d'ammoniaque (3) qui est agencé dans la structure flottante (2) et dans lequel de l'ammoniaque liquide est stocké ;
une conduite d'ammoniaque (4) qui conduit l'ammoniaque liquide dans le réservoir d'ammoniaque (3) vers un extérieur de la structure flottante (2) ;
une conduite d'eau (5, 305) qui conduit de l'eau environnante sur laquelle flotte la structure flottante (2) dans la structure flottante (2) ;
une unité de chauffage (6) qui est agencée au niveau de la structure flottante (2) et chauffe l'ammoniaque liquide en effectuant un échange thermique entre l'ammoniaque liquide circulant à travers la conduite d'ammoniaque (4) et l'eau circulant à travers la conduite d'eau (5, 305),
**caractérisée par**
une unité de détection d'état d'ammoniaque liquide (31, 431) qui est configurée pour détecter au moins une température de l'ammoniaque liquide chauffée par l'unité de chauffage (6) ;
une unité de réglage de débit (315) qui est configurée pour régler le débit de l'eau circulant à travers la conduite d'eau (5, 305) ;
une unité de commande de débit d'eau (72, 472) qui est configurée pour régler un débit de l'eau par l'unité de réglage de débit (315) de sorte qu'une température de l'ammoniaque liquide chauffée par l'unité de chauffage (6) se situe dans une première plage de température prédéterminée, sur la base d'un résultat de détection de l'unité de détection d'état d'ammoniaque liquide (31, 431) ; et
une unité de détection d'état d'eau (32) qui est configurée pour détecter au moins une température de l'eau dont la température a été abaissée par échange thermique avec l'ammoniaque liquide dans l'unité de chauffage (6), dans laquelle l'unité de commande de débit d'eau (72, 472) est configurée pour régler le débit de l'eau par l'unité de réglage de débit (315) de sorte que la température de l'eau dont la température a été abaissée par échange thermique avec l'ammoniaque liquide dans l'unité de chauffage (6) se situe dans une seconde plage de température prédéterminée, sur la base d'un résultat de détection de l'unité de détection d'état d'eau (32).

2. Installation (1) d'alimentation en combustible à l'ammoniaque selon la revendication 1, comprenant en outre :
un équipement de génération de chaleur (21) qui est agencé dans la structure flottante (2) et génère de la chaleur ; et
une unité de réchauffage (22) qui réchauffe l'eau dont la température a été abaissée par échange thermique avec l'ammoniaque liquide dans l'unité de chauffage, par de la chaleur émise par l'équipement de génération de chaleur (21).

3. Installation (1) d'alimentation en combustible à l'ammoniaque selon la revendication 1 ou 2, comprenant en outre :
une pompe d'augmentation de pression (11) qui augmente une pression de l'ammoniaque liquide.

4. Méthode d'alimentation en combustible à l'ammoniaque comprenant :
le chauffage de l'ammoniaque liquide stockée dans un réservoir d'ammoniaque (3) agencé dans une structure flottante (2) qui flotte sur de l'eau par échange thermique avec l'eau environnante sur laquelle flotte la structure flottante, puis la distribution de l'ammoniaque liquide à un extérieur de la structure flottante (2), **caractérisée par**
le réglage d'un débit de l'eau qui a subi un échange thermique avec l'ammoniaque liquide de sorte qu'une température de l'ammoniaque liquide chauffée par échange thermique se situe dans une première plage de température prédéterminée ; et
le réglage du débit de l'eau qui a subi un échange thermique avec l'ammoniaque liquide de sorte qu'une température de l'eau qui a subi un échange thermique avec l'ammoniaque liquide se situe dans une seconde plage de température prédéterminée.
